(19) Europäisches Patentamt
European Patent Office
Office européen des brevets

(11) **EP 3 158 534 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(21) Anmeldenummer: **15730125.0**

(22) Anmeldetag: **16.06.2015**

(51) Int Cl.:
***G06T 11/00*** *(2006.01)*

(86) Internationale Anmeldenummer:
**PCT/EP2015/063452**

(87) Internationale Veröffentlichungsnummer:
**WO 2015/193296 (23.12.2015 Gazette 2015/51)**

(54) **VERFAHREN UND AUSWERTEVORRICHTUNG ZUR AUSWERTUNG VON PROJEKTIONSDATEN EINES ZU UNTERSUCHENDEN OBJEKTS**

METHOD AND ANALYZING DEVICE FOR ANALYZING PROJECTION DATA OF AN OBJECT TO BE EXAMINED

PROCÉDÉ ET DISPOSITIF D'ÉVALUATION POUR L'ÉVALUATION DE DONNÉES DE PROJECTION D'UN OBJET À EXAMINER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2014 DE 102014211634**

(43) Veröffentlichungstag der Anmeldung:
**26.04.2017 Patentblatt 2017/17**

(73) Patentinhaber:
• **Fraunhofer-Gesellschaft zur Förderung der angewandten Forschung e.V.**
**80686 München (DE)**
• **Universität des Saarlandes**
**66123 Saarbrücken (DE)**

(72) Erfinder:
• **OECKL, Steven**
**91052 Erlangen (DE)**
• **LOUIS, Alfred**
**66121 Saarbrücken (DE)**
• **SCHÖN, Tobias**
**90453 Nürnberg (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
• **STEVEN OECKL: "New Inversion Formula for the X-ray transform and its Application to CT Reconstruction", MATHEMATICS AND ALGORITHMS IN TOMOGRAPHY, 10. August 2014 (2014-08-10), Seiten 2076-2078, XP055207826, DOI: 10.4171/OWR/2014/37**
• **ALEXANDER KATSEVICH: "An improved exact filtered backprojection algorithm for spiral computed tomography", ADVANCES IN APPLIED MATHEMATICS, Bd. 32, Nr. 4, Mai 2004 (2004-05), Seiten 681-697, XP055207855, ISSN: 0196-8858, DOI: 10.1016/S0196-8858(03)00099-X**

**Beschreibung**

Die Erfindung betrifft ein Verfahren und eine Auswertevorrichtung zur Auswertung von, insbesondere mittels Röntgencomputertomografie ermittelten, Projektionsdaten eines zu untersuchenden Objekts. Das zu untersuchende Objekt ist insbesondere ein Bauteil in der technischen Bauteilprüfung und/oder ein Patient in der medizinischen Bildverarbeitung.

In der Röntgencomputertomografie wird die geschwächte Intensität der Strahlung entlang unterschiedlicher Projektions-Strahlen durch ein zu untersuchendes Objekt gemessen, um daraus auf die Dichteverteilung im Objekt zu schließen. Analytische Rekonstruktionsverfahren zur Rekonstruktion des Objekts aus den Projektionsdaten basieren auf einer Inversion der Röntgen-Transformation, die das Modell der Röntgencomputertomografie darstellt.

Ein in dem Fachartikel "Mathematical framework of cone-beam reconstruction via the first derivative of the radon transform." von P. Grangeat in G. T. Herman, A. K. Louis und F. Natterer, Editors, Lecture Notes in Mathematics, Volume 1497, Seiten 66 bis 97, Springer 1991 beschriebenes Rekonstruktionsverfahren setzt das Vorliegen einer speziellen als Tuy-Kurve bezeichneten Trajektorie voraus. Die dem Rekonstruktionsverfahren zugrundeliegende Inversionsformel basiert auf einem Zusammenhang zwischen der bekannten dreidimensionalen Radon-Transformation und der bekannten dreidimensionalen Röntgen-Transformation. Bei diesem Rekonstruktionsverfahren muss zu einer als Crofton-Funktion bezeichneten unstetigen Funktion eine Ableitung gebildet werden, was in der Regel zu numerischen Instabilitäten des Rekonstruktionsverfahrens führt, wodurch das Rekonstruktionsverfahren eine unbefriedigende Zuverlässigkeit und Genauigkeit hat.

Aus dem Fachartikel "A general scheme for constructing inversion algorithms for cone beam ct." von A. Katsevich, International Journal of Mathematics and Mathematical Sciences, 2003 (21): 1305 bis 1321, 2003, ist ein Rekonstruktionsverfahren bekannt, das auf dem in dem Fachartikel von P. Grangeat beschriebenen Zusammenhang zwischen der dreidimensionalen Radon- und der dreidimensionalen Röntgen-Transformation basiert, das jedoch eine Gewichtsfunktion benutzt, um die Ableitung der Crofton-Funktion zu vermeiden. Das Rekonstruktionsverfahren ist zwar numerisch stabiler, jedoch ist die Bestimmung der Gewichtsfunktion sehr aufwendig.

Ein weiterer Fachartikel "An improved exact filtered backprojection algorithm for spiral computed tomography" von A. Katsevich, Advances in Applied Mathematics, Bd. 32, Nr. 4, Mai 2004, S. 681-697, offenbart ein exaktes Verfahren vom Typ gefilterte Rückprojektion zur Rekonstruktion von 3D Bilddaten aus Kegelstrahlprojektionsdaten, welche entlang einer spiralförmigen Trajektorie aufgenommen wurden.

Der Erfindung liegt die Aufgabe zugrunde, ein Verfahren zu schaffen, das eine einfache, exakte, zuverlässige und flexibel einsetzbare Auswertung von Projektionsdaten eines zu untersuchenden Objekts ermöglicht.

Diese Aufgabe wird durch ein Verfahren mit den Merkmalen des Anspruch 1 gelöst. Das erfindungsgemäße Verfahren ermittelt für die Projektionspositionen, an denen die Projektionsdaten des zu untersuchenden Objekts entlang der Trajektorie ermittelt sind, eine jeweilige Trajektorien-Funktion und transformiert diese in einen Frequenzraum. Die Projektionsdaten werden anschließend mittels der transformierten Trajektorien-Funktionen hinsichtlich mindestens einer Eigenschaft des Objekts ausgewertet, beispielsweise wird das zu untersuchende Objekt anhand der Projektionsdaten vollständig rekonstruiert. Bei dem erfindungsgemäßen Verfahren ist eine Ableitung der Projektionsdaten für eine Projektionsposition und über mehrere Projektionspositionen nicht erforderlich. Insbesondere muss die aus dem Stand der Technik bekannte Crofton-Funktion nicht abgeleitet werden. Hierdurch ist das erfindungsgemäße Verfahren numerisch stabil und gewährleistet eine einfache, exakte und zuverlässige Auswertung der Projektionsdaten. Darüber hinaus ermöglicht das erfindungsgemäße Verfahren eine Auswertung der Projektionsdaten in einem Rekonstruktionsbereich mit einer beliebigen Dimension n. Für die Dimension n kann insbesondere gelten: n = 2, 3 oder 4. Dies bedeutet, dass das erfindungsgemäße Verfahren zur zweidimensionalen schichtweisen und zur dreidimensionalen räumlichen Auswertung der Projektionsdaten eingesetzt werden kann, insbesondere auch, wenn sich das zu untersuchende Objekt in einer zusätzlichen zeitlichen Dimension verändert. Bei einer vierdimensionalen Auswertung sind Projektionsdaten an der jeweiligen Projektionsposition über die Zeit ermittelt, so dass die Zeit bei dem erfindungsgemäßen Verfahren als zusätzliche Dimension der Trajektorie bzw. des Rekonstruktionsbereichs gilt. Das erfindungsgemäße Verfahren weist somit hinsichtlich der Auswertung eine hohe Flexibilität auf.

Stellt die Trajektorie, entlang der die Projektionsdaten in den Projektionspositionen ermittelt sind, eine Tuy-Kurve dar, so weist jede der ermittelten Hyperebenen mindestens einen Schnittpunkt mit der Trajektorie auf, was für die Auswertung optimal ist. Jedoch ermöglicht das erfindungsgemäße Verfahren auch dann eine Auswertung der Projektionsdaten mit bestimmbaren Ungenauigkeiten bzw. Artefakten, wenn die Trajektorie keine Tuy-Kurve bildet, wie dies beispielsweise bei einer Kreisbahn als Trajektorie und einer dreidimensionalen räumlichen Auswertung von Projektionsdaten in der Regel der Fall ist. Das erfindungsgemäße Verfahren weist somit eine hohe Flexibilität und Robustheit hinsichtlich der Wahl der Trajektorie bei der Ermittlung der Projektionsdaten auf.

Das Ermitteln der jeweiligen Trajektorien-Funktion t kann mathematisch wie folgt zusammengefasst werden:

Die Abbildung $\phi: \Lambda \to R^n$ ist die mathematische Formulierung der Trajektorie, die sich im n-dimensionalen Raum

der reellen Zahlen $R^n$ befindet, wobei A ein eindimensionales Intervall bezeichnet. Zudem bezeichnet $\Omega \subseteq R^n$ den n-dimensionalen Rekonstruktionsbereich. Im Folgenden wird die n-dimensionale Projektionsposition $\phi(\lambda)$ auch abkürzend als Projektionsposition $\lambda$ bezeichnet, da die n-dimensionale Projektionsposition $\phi(\lambda)$ bereits durch den Parameter $\lambda$ eindeutig bezeichnet ist.

Für eine Position y aus dem Rekonstruktionsbereich $\Omega$ wird für jede Projektionsposition $\lambda$ eine Trajektorien-Funktion t durch

$$t(\lambda, y) := \left|\langle \phi'(\lambda), y \rangle\right| s(y, \langle \phi(\lambda), y \rangle)^{-1} = \frac{\left|\langle \phi'(\lambda), y \rangle\right|}{s(y, \langle \phi(\lambda), y \rangle)} \qquad (1)$$

definiert und bestimmt.

Hierbei bezeichnen $\langle \phi'(\lambda), y \rangle$ und $\langle \phi(\lambda), y \rangle$ das Skalarprodukt zwischen dem Ableitungsvektor $\phi'(\lambda)$ und der Position y bzw. zwischen $\phi(\lambda)$ und der Position y. Die Funktion s (y, $\langle \phi(\lambda), y \rangle$) bezeichnet die Anzahl der Schnittpunkte S zwischen der Trajektorie $\phi$ und derjenigen n - 1 dimensionalen Hyperebene H, die senkrecht auf dem Richtungsvektor r steht und deren Abstand d zum Koordinatenursprung O dem Wert des Skalarprodukts $\langle \phi(\lambda), y \rangle$ entspricht. Die Transformation von der Trajektorien-Funktion t hinsichtlich y in den Frequenzraum wird mit T($\lambda$, y) bezeichnet.

Ein Verfahren nach Anspruch 2 gewährleistet eine hohe Flexibilität bei der Auswertung der Projektionsdaten. Bei der Untersuchung von lang ausgedehnten Objekten, wie beispielsweise von Rotorblättern in der Industrie oder Patienten in der Medizin, tritt aufgrund von konstruktiven Beschränkungen der Prüfanlage der Fall auf, dass Bereiche bzw. Objektbereiche existieren, die in Projektionsdaten zu verschiedenen Projektionspositionen abgebildet sind, sich in dem Rekonstruktionsbereich jedoch nicht überdecken. Dieser Fall ist beispielsweise in der Röntgencomputertomografie als Long-Object-Problem bekannt, da bekannte Rekonstruktionsverfahren bei derartigen Projektionsdaten äußerst aufwendig sind. Das erfindungsgemäße Verfahren gewährleistet auch eine Auswertung derartiger Projektionsdaten.

Ein Verfahren nach Anspruch 3 gewährleistet eine einfache und zuverlässige Transformation der Trajektorien-Funktionen in den Frequenzbereich.

Ein Verfahren nach Anspruch 4 gewährleistet eine einfache, exakte, zuverlässige und flexible Auswertung der Projektionsdaten. Dadurch, dass nicht alle Positionen in dem Rekonstruktionsbereich auf der Einheitssphäre liegen, wird eine zuverlässige Berechnung der Trajektorien-Funktionen und deren Transformation in den Frequenzbereich gewährleistet. Bekannte Auswerte- bzw. Rekonstruktionsverfahren haben die zwingende Bedingung, dass alle Positionen in dem Rekonstruktionsbereich auf der Einheitssphäre liegen müssen.

Ein Verfahren nach Anspruch 5 gewährleistet eine hohe Flexibilität bei der Auswertung der Projektionsdaten. Ist die Trajektorie als Tuy-Kurve ausgebildet, so hat jede Hyperebene mindestens einen Schnittpunkt mit der Trajektorie. Für Tuy-Kurven weist das erfindungsgemäße Verfahren eine hohe Genauigkeit auf. Das erfindungsgemäße Verfahren ermöglicht jedoch auch eine Auswertung der Projektionsdaten, wenn die Trajektorie keine Tuy-Kurve ist. In diesem Fall weist nicht jede Hyperebene mindestens einen Schnittpunkt mit der Trajektorie auf. Da der Absolutbetrag durch die Anzahl der Schnittpunkte geteilt wird, würde dies zu numerischen Instabilitäten führen. Um dies zu vermeiden, wird für derartige Trajektorien ein Schätzwert für die Anzahl der Schnittpunkte ungleich Null bestimmt, wenn eine Hyperebene keinen Schnittpunkt mit der Trajektorie hat. Vorzugsweise wird der Schätzwert aus der Anzahl von Schnittpunkten zu benachbarten Hyperebenen bestimmt, die einen Schnittpunkt mit der Trajektorie haben. Das erfindungsgemäße Verfahren ist somit auch für Trajektorien flexibel einsetzbar, die keine Tuy-Kurve bilden. Ungenauigkeiten, die sich bei der Auswertung Projektionsdaten ergeben, da die Trajektorie keine Tuy-Kurve bildet, können bestimmt werden, so dass das Ergebnis der Auswertung beurteilbar ist.

Ein Verfahren nach Anspruch 6 gewährleistet eine einfache und schnelle Transformation der Trajektorien-Funktionen in den Frequenzraum.

Ein Verfahren nach Anspruch 7 gewährleistet eine exakte Auswertung der Projektionsdaten. Die gemessenen Projektionsdaten werden entlang der Rückprojektions-Strahlen in den Rekonstruktionsbereich rückprojiziert. Anschließend werden die rückprojizierten Projektionsdaten gewichtet und die zugehörige transformierte Trajektorien-Funktion mit der gewichteten Rückprojektion durch eine Faltung gefiltert. Die Faltungsergebnisse für die Projektionspositionen werden für die Auswertung der Projektionsdaten addiert. Das zu untersuchende Objekt wird somit durch eine Filterung nach einer gewichteten Rückprojektion zumindest teilweise rekonstruiert. Mit dem erfindungsgemäßen Verfahren kann insbesondere das gesamte Objekt exakt rekonstruiert werden. Zudem kann die Rekonstruktion auf gewünschte Bereiche des Objekts, wie beispielsweise dessen Oberfläche oder in ihrer Art bekannte Objekt-Strukturen beschränkt werden, indem auf das jeweilige Faltungsergebnis übliche und bekannte lineare Operatoren, wie beispielsweise ein Kanten-Operator, ein Struktur-Operator, eine Wavelet-Transformation oder eine Hilbert-Transformation angewandt wird.

Die Rekonstruktion des Objekts f kann mathematisch wie folgt zusammengefasst werden:

Mit $S^{n-1}$ wird die n-dimensionale Einheitssphäre bezeichnet, das heißt die Menge aller n-dimensionalen Vektoren der Länge 1. Die n-dimensionale Funktion f bezeichnet das zu rekonstruierende Objekt.

Den Projektionswert einer Projektion von der Funktion f an der Projektionsposition λ für die Strahlrichtung θ wird definiert als

$$g(\lambda, \theta) := \int_0^\infty f(\phi(\lambda) + z\theta)\,dz, \tag{2}$$

wobei θ ein Element der n-dimensionalen Einheitssphäre $S^{n-1}$ und z eine Integrationsvariable ist.

Für jede Projektionsposition λ wird eine Faltung der Projektionsdaten g mit der transformierten Trajektorien-Funktion T definiert und ermittelt durch

$$c(\lambda, y) := \int_{R^n} \frac{1}{|e|} g\left(\lambda, \frac{e}{|e|}\right) T(\lambda, y - e)\,de. \tag{3}$$

c bezeichnet das Faltungsergebnis. e ist eine Integrationsvariable. Der Term $\frac{1}{|e|} g\left(\lambda, \frac{e}{|e|}\right)$ in Formel (3) entspricht dabei einer gewichteten Rückprojektion. Das Rekonstruktionsverfahren, mit dem für das Objekt f der der Dichte entsprechende Wert an der Strahlenposition b bestimmt wird, basiert auf der Gleichung:

$$f(b) - \frac{1}{2\pi} \int_\lambda \; c\left(\lambda, \phi(\lambda) - b\right) + c\left(\lambda, b - \phi(\lambda)\right)\,d\lambda. \tag{4}$$

Da die Faltung c (λ, φ (λ) - b) nur vernachlässigbar kleine Werte annimmt, kann die Berechnung von f (b) auf den Integranden c (λ, b - φ (λ)) wie folgt beschränkt werden:

$$f(b) \approx \frac{1}{2\pi} \int_\lambda \; c\left(\lambda, b - \phi(\lambda)\right)\,d\lambda. \tag{5}$$

Die Konstante 1/(2π) ist hierbei vernachlässigbar. Das erfindungsgemäße Rekonstruktionsverfahren stellt eine diskrete Implementierung der analytischen Formel (5) dar.

Ein Verfahren nach Anspruch 8 gewährleistet eine einfache und dementsprechend schnelle Auswertung der Projektionsdaten. Bei dem Verfahren wird zu mindestens einem Rückprojektions-Strahl eine Filter-Funktion mittels der zugehörigen transformierten Trajektorien-Funktion berechnet, wobei die Rückprojektion mittels der rotierten Filter-Funktion berechnet wird.

Bei dieser Rückprojektion mit Filterung kann die Filterung in Abhängigkeit der Anzahl der mindestens einen berechneten Filter-Funktion vollständig translationsinvariant, abschnittsweise translationsinvariant oder translationsvariant sein. Wird zu genau einem Rückprojektions-Strahl eine Filter-Funktion berechnet, so wird diese Filter-Funktion als Basis für alle Rückprojektions-Strahlen und die zugehörige Rückprojektion angewandt. Bei der Berechnung von genau einer Filter-Funktion ist die Filterung somit vollständig translationsinvariant, da die genau eine Filter-Funktion für die Berechnung der Rückprojektion entlang aller Rückprojektions-Strahlen verwendet wird. Werden für mehrere Rückprojektions-Strahlen jeweilige Filter-Funktionen berechnet, so ist die Filterung mit diesen Filter-Funktionen abschnittsweise translationsinvariant. Die jeweilige Filter-Funktion dient als Basis für die Berechnung der Rückprojektion entlang des Rückprojektions-Strahls, zu dem die Filter-Funktion berechnet wurde, sowie für die Berechnung der Rückprojektion entlang weiterer benachbarter Rückprojektions-Strahlen. Wird demgegenüber für alle Rückprojektions-Strahlen eine eigene Filter-Funktion berechnet, so ist die Filterung translationsvariant, da eine berechnete Filter-Funktion nicht auch für die Berechnung der Rückprojektion entlang eines benachbarten Rückprojektions-Strahls verwendet wird. Mit der Anzahl der zu berechnenden Filter-Funktionen erhöhen sich die Genauigkeit sowie der Aufwand bei der Auswertung der Projektionsdaten. Somit hat die Auswertung der Projektionsdaten bei der Rückprojektion mit translationsinvarianter Filterung den geringsten Aufwand und die Auswertung bei der Rückprojektion mit translationsvarianter Filterung die höchste Genauigkeit. Über die Anzahl der zu berechnenden Filter-Funktionen kann somit der Aufwand und die Genauigkeit bei der Rekonstruktion an ein gewünschtes Maß angepasst werden. Hierbei sind die Ungenauigkeiten bzw. Artefakte bestimmbar. Mit dem erfindungsgemäßen Verfahren kann das zu untersuchende Objekt vollständig rekonstruiert werden. Zur teilweisen Rekonstruktion des Objekts, beispielsweise zur Rekonstruktion der Oberfläche oder von in ihrer Art oder Lage bekannten Objekt-Strukturen können auf die jeweilige gedrehte transformierte Trajektorien-Funktion bekannte und übliche lineare Operatoren, wie beispielsweise ein Kanten-Operator, ein Struktur-Operator, eine Wavelet-Transformtion oder eine Hilbert-Transformation angewandt werden.

Das Rekonstruktionsverfahren kann mathematisch wie folgt zusammengefasst werden:

Mit $S^{n-1}$ wird die n-dimensionale Einheitssphäre bezeichnet, das heißt die Menge aller n-dimensionalen Vektoren der Länge 1. Die n-dimensionale Funktion f bezeichnet das zu rekonstruierende Objekt.

Der Projektionswert einer Projektion von der Funktion f an der Projektionsposition $\lambda$ für die Strahlrichtung $\theta$ wird definiert als

$$g(\lambda, \theta) := \int_0^\infty f(\phi(\lambda) + z\theta) dz, \qquad (6)$$

wobei $\theta$ ein Element der n-dimensionalen Einheitssphäre $S^{n-1}$ und z eine Integrationsvariable ist.

Für eine Auswerteposition k aus dem n-dimensionalen Rekonstruktionsbereich $\Omega$ und eine Projektionsposition $\lambda$ bezeichnet $U_{k, \lambda}$ diejenige n-dimensionale Rotation, mit der die Verbindungsgerade von der Auswerteposition k und der Projektionsposition $\lambda$ auf die Verbindungsgerade von dem Koordinatenursprung O und der Projektionsposition $\lambda$ gedreht werden kann, wobei das Drehzentrum in der Projektionsposition $\lambda$ liegt. Diese n-dimensionale Rotation ist durch n-1 Winkel $\alpha$ (1) bis $\alpha$ (n - 1) eindeutig identifizierbar. Entsprechend bezeichnet $U_{k, \lambda}^{-1}$ die n-dimensionale Rotation in die entgegengesetzte Richtung.

Zu jeder Auswerteposition k aus dem n-dimensionalen Rekonstruktionsbereich $\Omega$ und jeder Projektionsposition $\lambda$ wird durch

$$T' (k, \lambda, y) := U_{k, \lambda} T(\lambda, y) \qquad (7)$$

eine gedrehte transformierte Trajektorien-Funktion T' definiert und ermittelt, wobei die Rotation $U_{k, \lambda}$ auf die Position y als Variable von T angewendet wird.

Durch eine gewichtete Vorwärtsprojektion wird zu jedem Auswertepunkt k aus dem n-dimensionalen Rekonstruktionsbereich $\Omega$ und jeder Projektionsposition $\lambda$ eine Filter-Funktion F in Abhängigkeit einer Richtung $\theta$ aus $S^{n-1}$ bestimmt durch

$$F(k, \lambda, \theta) := \int_{-\infty}^{\infty} |x|^{n-2} T'(k, \lambda, \phi(\lambda) + x\theta) dx, \qquad (8)$$

wobei x eine Integrationsvariable ist.

Da die gedrehte transformierte Trajektorien-Funktion T' außerhalb des Rekonstruktionsbereichs $\Omega$ vernachlässigbar kleine Werte annimmt, kann bei der Berechnung der Filter-Funktion F die Integration entlang von Halbgeraden anstelle von Geraden beschränkt werden. Es gilt näherungsweise:

$$F(k, \lambda, \theta) \approx \int_0^\infty |x|^{n-2} T'(k, \lambda, \phi(\lambda) + x\theta) dx \qquad (9)$$

Es wird zudem eine gedrehte Filter-Funktion

$$F' (k, \lambda, \theta) := U_{k, \lambda}^{-1} F (k, \lambda, \theta) \qquad (10)$$

definiert und ermittelt, wobei die Rotation $U_{k, \lambda}^{-1}$ auf die Richtungswinkel $\theta$ als Variable von F angewendet wird.

Das Rekonstruktionsverfahren, mit dem für das Objekt f der der Dichte entsprechende Wert an der Auswerteposition k bestimmt werden kann, basiert auf der nachfolgenden Gleichung:

$$f(k) = \frac{1}{2\pi} \int_\lambda \left( \frac{|\phi(\lambda)|}{|\phi(\lambda) - k|} \right)^2 \int_{S^n} g(\lambda, \theta) F'(k, \lambda, \theta) d\theta \, d\lambda. \qquad (11)$$

Die Konstante $1/(2\pi)$ ist hierbei vernachlässigbar. Der Term $\int_{S^n} g(\lambda, \theta) F'(k, \lambda, \theta) d\theta$ Formel (11) entspricht dabei einer gefilterten Rückprojektion. Das erfindungsgemäße Rekonstruktionsverfahren stellt eine diskrete Implementierung der analytischen Formel (11) dar.

Ein Verfahren nach Anspruch 9 gewährleistet eine hohe Flexibilität bei der Auswertung der Projektionsdaten. Mit zunehmender Anzahl der Rückprojektions-Strahlen, zu denen die gedrehte transformierte Trajektorien-Funktion und die Filter-Funktion berechnet werden, nimmt die Genauigkeit zu. Vorzugsweise wird die gedrehte transformierte Trajektorien-Funktion und die Filter-Funktion unabhängig von der Anzahl der Rückprojektions-Strahlen immer für den Rückprojektions-Strahl mit dem Rotationswinkel Null berechnet, da die Berechnung für diesen Rückprojektions-Strahl äußerst einfach ist.

Ein Verfahren nach Anspruch 10 gewährleistet eine hohe Flexibilität bei der Auswertung der Projektionsdaten. Durch die Rückprojektion mit abschnittsweise translationsinvarianter Filterung kann in Abhängigkeit des Winkelbereichs ein gewünschtes Maß an Einfachheit bzw. Schnelligkeit und Genauigkeit bei der Auswertung erzielt werden. Einer der Winkelbereiche ist insbesondere symmetrisch zu dem Verbindungsstrahl angeordnet, da hierdurch die zu dem Rückprojektions-Strahl mit dem Rotationswinkel Null berechnete Filter-Funktion für diesen Winkelbereich verwendet werden kann. Dies vereinfacht die Auswertung.

Der Erfindung liegt ferner die Aufgabe zugrunde, eine Auswertevorrichtung zu schaffen, die eine einfache, exakte, zuverlässige und flexibel einsetzbare Auswertung von Projektionsdaten eines zu untersuchenden Objekts ermöglicht.

Diese Aufgabe wird durch eine Auswertevorrichtung mit den Merkmalen des Anspruchs 11 gelöst. Die Vorteile der erfindungsgemäßen Auswertevorrichtung entsprechen den bereits beschriebenen Vorteilen des erfindungsgemäßen Verfahrens. Die Auswertevorrichtung ist insbesondere derart ausgebildet, dass diese auch mit den Merkmalen der Ansprüche 1 bis 10 weitergebildet werden kann.

Eine Prüfanlage nach Anspruch 12 gewährleistet eine einfache und schnelle Auswertung der Projektionsdaten. Die ermittelten Projektionsdaten können insbesondere parallel zu der Ermittlung weiterer Projektionsdaten bereits ausgewertet werden. Die Prüfanlage ist insbesondere als Röntgencomputertomograf zur Prüfung von Objekten ausgebildet. Weiterhin kann das erfindungsgemäße Verfahren in einer Anlage zur Positronen-Emissions-Tomografie, Seismischen-Tomografie, Schichtbildgebung mit Ultraschall oder Radioastronomie eingesetzt werden. Des Weiteren kann das erfindungsgemäße Verfahren immer dann eingesetzt werden, wenn Projektionsdaten eines Objekts vorliegen, die durch eine Röntgen-Transformation modelliert werden können, und eine Eigenschaft des Objekts berechnet werden soll.

Weitere Merkmale, Vorteile und Einzelheiten der Erfindung ergeben sich aus der nachfolgenden Beschreibung mehrerer Ausführungsbeispiele. Es zeigen:

Fig. 1    eine schematische Darstellung einer Prüfanlage zur Ermittlung und Auswertung von Projektionsdaten eines zu untersuchenden Objekts,

Fig. 2    ein Ablaufschema zur Ermittlung von in einen Frequenzraum transformierten Trajektorien-Funktionen zur Auswertung der ermittelten Projektionsdaten,

Fig. 3    eine schematische Darstellung der Ermittlung der Trajektorien-Funktionen,

Fig. 4    ein Ablaufschema zur Veranschaulichung eines Auswerteverfahrens gemäß einem ersten Ausführungsbeispiel zur Auswertung der Projektionsdaten,

Fig. 5    eine Darstellung einer Trajektorien-Funktion t entlang einer v-Richtung,

Fig. 6    eine Darstellung einer in den Frequenzraum transformierten Trajektorien-Funktion T zu der Trajektorien-Funktion t in Fig. 5,

Fig. 7    eine schematische Darstellung zur Veranschaulichung des Auswerteverfahrens gemäß Fig. 4,

Fig. 8    ein Ablaufschema zur Veranschaulichung eines Auswerteverfahrens gemäß einem zweiten Ausführungsbeispiel,

Fig. 9    eine schematische Darstellung zur Veranschaulichung der Berechnung einer jeweiligen rotierten Filter-Funktion für Rückprojektions-Strahlen,

Fig. 10    eine schematische Darstellung zur Veranschaulichung der Berechnung einer gewichteten Rückprojektion, und

Fig. 11    eine schematische Darstellung zur Veranschaulichung der Berechnung von rotierten Filter-Funktionen auf Basis von einer Filter-Funktion bei einem Auswerteverfahren gemäß einem dritten Ausführungsbeispiel.

Eine Prüfanlage 1 weist zur Ermittlung und Auswertung von Projektionsdaten g eines zu untersuchenden Objekts f eine Projektionsquellen-Detektor-Einheit 2 und eine Auswertevorrichtung 3 auf. Die Auswertevorrichtung 3 ist in Signalverbindung mit einer Projektionsquelle 4 und einem Detektor 5 der Projektionsquellen-Detektor-Einheit 2. Die Prüfanlage 1 ist beispielsweise als Röntgencomputertomograf zur Prüfung des Objekts f mittels Röntgenstrahlung ausgebildet.

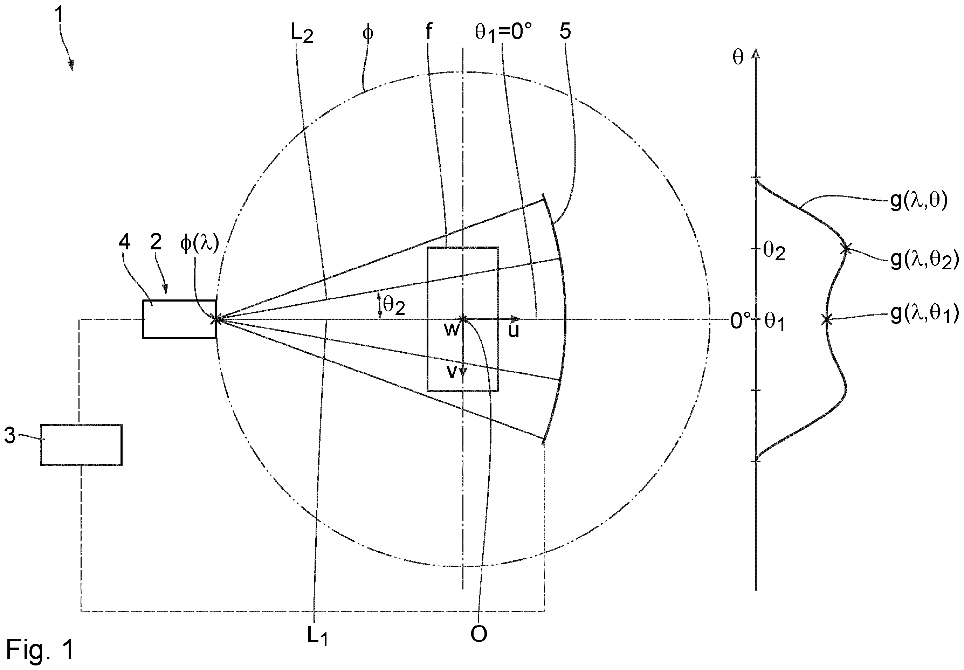

Die Projektionsquellen-Detektor-Einheit 2 kann in Abhängigkeit des zu untersuchenden Objekts f prinzipiell beliebig ausgebildet sein. Beispielsweise kann die Projektionsquelle 2 zur dreidimensionalen Prüfung des Objekts f einen Kegelstrahl emittieren und der zugehörige Detektor 5 als Flächen-Detektor ausgebildet sein. Weiterhin kann die Projektionsquelle 4 zur zweidimensionalen Prüfung des Objekts f einen Fächerstrahl emittieren und der zugehörige Detektor 5 als Zeilen-Detektor ausgebildet sein. Figur 1 veranschaulicht einen Fächerstrahl bzw. einen fächerförmigen Teil eines Kegelstrahls und einen zugehörigen Zeilen-Detektor bzw. eine Zeile eines zugehörigen Flächen-Detektors.

Die Prüfanlage 1 definiert ein kartesisches Koordinatensystem mit senkrecht zueinander verlaufenden u-, v- und w-Richtungen und einem Koordinatenursprung O. Figur 1 veranschaulicht die u-v-Ebene. Die Projektionsquellen-Detektor-Einheit 2 und das Objekt f sind relativ zueinander entlang einer Trajektorie $\phi$ verfahrbar. Hierzu ist die Projektionsquellen-Detektor-Einheit 2 und/oder das Objekt f um eine durch den Koordinatenursprung O in w-Richtung verlaufende Rotationsachse rotierbar und insbesondere auch entlang der Rotationsachse linear verfahrbar.

Die Funktionsweise der Prüfanlage 1 ist wie folgt:

Das zu untersuchende Objekt f wird im Wesentlichen mittig zu dem Koordinatenursprung O zwischen der Projektionsquelle 4 und dem Detektor 5 angeordnet. Anschließend wird die Projektionsquellen-Detektor-Einheit 2 relativ zu dem Objekt f entlang einer Trajektorie $\phi$ verfahren. In Figur 1 ist die Trajektorie $\phi$ eine Kreisbahn um den Koordinatenursprung O. An einer Vielzahl von Projektionspositionen $\lambda$ wird das Objekt f mittels der Projektionsquelle 4 bestrahlt und mittels des Detektors 5 zugehörige Projektionsdaten g des Objekts f ermittelt. Jedes Pixel des Detektors 5 entspricht hierbei einem Vorwärtsprojektions-Strahl L, der relativ zu einem Verbindungsstrahl zwischen der Projektionsposition $\lambda$ und dem Koordinatenursprung O einen Richtungswinkel $\theta$ hat. Wie in Figur 1 veranschaulicht ist, hängen die Projektionsdaten g somit von der Projektionsposition $\lambda$ und dem Richtungswinkel $\theta$ ab. Der Richtungswinkel $\theta$ ist in Figur 1 in der u-v-Ebene veranschaulicht. Für einen Flächen-Detektor hat der Richtungswinkel $\theta$ entsprechend mehrere Komponenten.

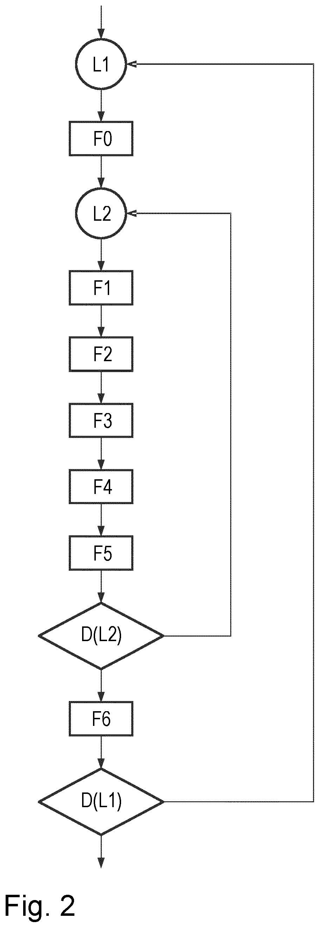

Die Auswertevorrichtung 3 dient zur Auswertung der Projektionsdaten g. Die Auswertung der Projektionsdaten g erfolgt erfindungsgemäß mittels Trajektorien-Funktionen t. Hierbei wird für jede Projektionsposition $\lambda$ eine jeweils zugehörige Trajektorien-Funktion t ermittelt. Die Ermittlung der Trajektorien-Funktionen t ist in dem Ablaufschema in Figur 2 veranschaulicht.

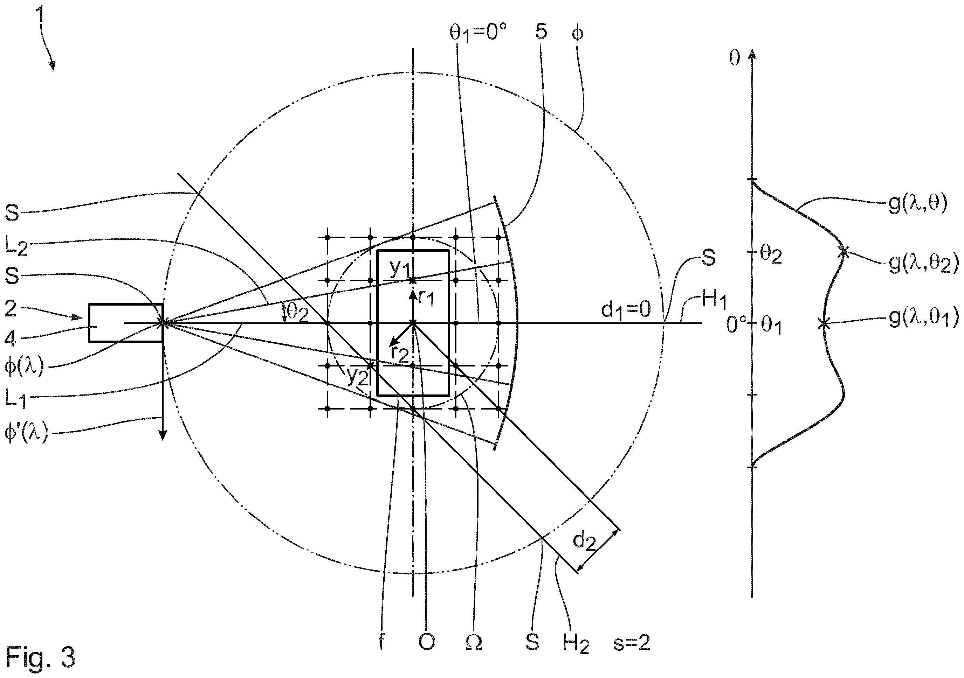

In einem Schritt L1 wird aus den Projektionspositionen $\lambda$ eine Projektionsposition $\lambda$ ausgewählt. Anschließend wird in einem Schritt F0 eine Menge von Positionen y festgelegt, die in einem gewünschten Rekonstruktionsbereich $\Omega$ der Dimension n in einem Gitter angeordnet sind. Das Gitter umfasst den Rekonstruktionsbereich $\Omega$ vorzugsweise vollständig. In einem Schritt L2 wird aus den festgelegten Positionen y eine Position y ausgewählt. Für diese Position y wird in einem Schritt F1 ein Abstand d sowie ein Richtungsvektor r als derjenige Vektor bestimmt, der den Koordinatenursprung O mit der Position y verbindet. Die Bestimmung des Abstands d erfolgt durch Berechnung des Skalarprodukts zwischen der Position y und der Projektionsposition $\lambda$. Für zwei Positionen $y_1$ und $y_2$ sind in Figur 3 beispielhaft die zugehörigen Abstände $d_1$ und $d_2$ sowie die zugehörigen Richtungsvektoren $r_1$ und $r_2$ veranschaulicht. In einem Schritt F2 wird eine Hyperebene H der Dimension n-1 bestimmt, die senkrecht zu dem Richtungsvektor r verläuft und den Abstand d zu dem Koordinatenursprung O hat. Für die Dimension n=2 ist die Hyperebene H eine Gerade. In Figur 3 sind beispielhaft Hyperebenen $H_1$ und $H_2$ dargestellt. Anschließend wird in einem Schritt F3 die Anzahl s von Schnittpunkten S der Hyperebene H mit der Trajektorie $\phi$ bestimmt. In Figur 3 weisen die Hyperebenen $H_1$ und $H_2$ jeweils zwei Schnittpunkte S auf, so dass s=2 gilt. In einem darauffolgenden Schritt F4 wird ein Ableitungsvektor $\phi'$ der Trajektorie $\phi$ nach ihrem Trajektorienverlauf bestimmt und in der Projektionsposition $\lambda$ berechnet. Dies entspricht der Bestimmung des Tangentenvektors an die Trajektorie $\phi$ in der Projektionsposition $\lambda$. Anschließend wird für die Position y die Trajektorien-Funktion t bestimmt, indem ein Absolutbetrag eines Skalarprodukts zwischen dem Ableitungsvektor $\phi'$ und der Position y bestimmt und dieser durch die Anzahl s geteilt wird. Anschließend wird in einer Schleife D(L2) abgefragt, ob alle Positionen y aus dem in dem in Schritt F0 festgelegten Gitter abgearbeitet wurden. Falls nein, wird zu Schritt L2 zurückgesprungen und die nächste Position y ausgewählt, bis alle Positionen y abgearbeitet wurden.

Wurde die Trajektorien-Funktion t für alle Positionen y bestimmt, so wird diese in einem Schritt F6 in einen Frequenzraum der Dimension n in Abhängigkeit der Positionen y transformiert. Anschließend wird in einer Schleife D(L1) abgefragt, ob alle Projektionspositionen $\lambda$ abgearbeitet wurden. Falls nein, wird zu Schritt L1 zurückgesprungen und die nächste Projektionsposition $\lambda$ ausgewählt. Im Schritt F0 wird wiederum eine Menge von Positionen y festgelegt. Anschließend wird für die nächste Projektionsposition $\lambda$ in der beschriebenen Weise die Trajektorien-Funktion t ermittelt und in den Frequenzraum transformiert.

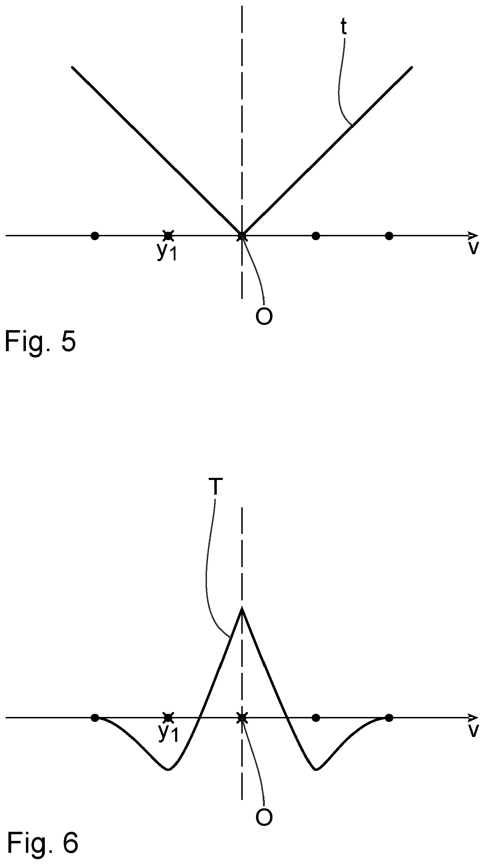

Auf die beschriebene Weise wird somit für jede Projektionsposition $\lambda$ eine transformierte Trajektorien-Funktion T ermittelt. Das Transformieren der Trajektorien-Funktionen t in den Frequenzraum erfolgt beispielsweise mittels einer Fourier-Transformation. In Fig. 5 ist eine der Trajektorien-Funktionen t entlang der v-Richtung durch den Koordinatenursprung O dargestellt. Die dargestellte Funktion t ist in dem Rekonstruktionsbereich $\Omega$ entlang der u-Richtung konstant. In Fig. 6 ist die zu der Trajektorien-Funktion t gehörige transformierte Trajektorien-Funktion T entlang der v-Richtung durch den Koordinatenursprung O des Frequenzraums veranschaulicht. Die dargestellte Funktion T ist außerhalb der v-Richtung Null.

Da die Positionen y in dem Rekonstruktionsbereich $\Omega$ verteilt und insbesondere in Form eines Gitters angeordnet sind, gilt für den jeweiligen Abstand d in der Regel: $d \neq 1$. Dies bedeutet, dass der Abstand d der Positionen y in der Regel nicht auf der Einheitssphäre liegt. Einzelne Positionen y können jedoch zufällig auf der Einheitssphäre liegen.

Ist die Trajektorie $\phi$ als Tuy-Kurve ausgebildet, so weist jede Hyperebene H einen Schnittpunkt S mit der Trajektorie $\phi$ auf. Das erfindungsgemäße Verfahren kann auch in Verbindung mit einer Trajektorie $\phi$ durchgeführt werden, die keine Tuy-Kurve bildet. Bildet die Trajektorie $\phi$ keine Tuy-Kurve, so weist mindestens eine der Hyperebenen H keinen Schnittpunkt S mit der Trajektorie $\phi$ auf, so dass für diese Hyperebene H s=0 gelten würde. Um eine Division durch Null in Schritt F5 zu vermeiden, wird für Hyperebenen H ohne Schnittpunkt S in Schritt F3 ein Schätzwert $s \neq 0$ für die Anzahl s der Schnittpunkte S bestimmt. Der Schätzwert wird vorzugsweise in Abhängigkeit von der Anzahl s zu benachbarten Positionen y bestimmt.

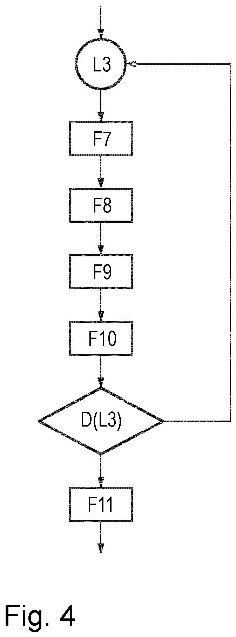

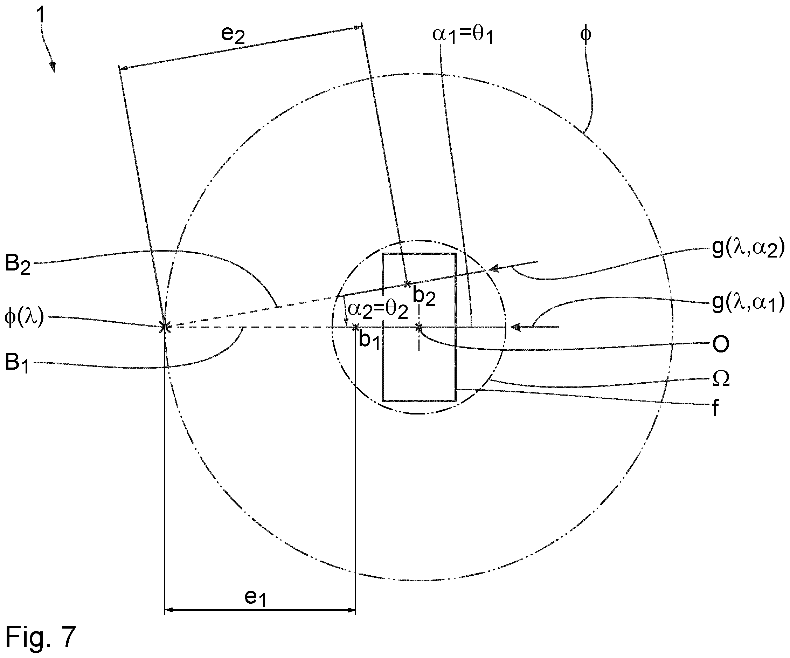

Mittels der transformierten Trajektorien-Funktionen T werden die Projektionsdaten g hinsichtlich mindestens einer Eigenschaft des Objekts f ausgewertet. Nachfolgend ist anhand der Figuren 4 bis 7 ist ein erstes Ausführungsbeispiel für ein Auswerteverfahren beschrieben. In einem Schritt L3 wird aus den Projektionspositionen $\lambda$ eine Projektionsposition $\lambda$ ausgewählt. Zu dieser Projektionsposition $\lambda$ werden in einem Schritt F7 mehrere Rückprojektions-Strahlen B durch den Rekonstruktionsbereich $\Omega$ zur Rückprojektion der zugehörigen Projektionsdaten g bestimmt. In Figur 7 sind beispielhaft Rückprojektions-Strahlen $B_1$ und $B_2$ dargestellt. In einem Schritt F8 wird eine Rückprojektion derart berechnet, dass die Projektionsdaten g entlang der Rückprojektions-Strahlen B an mehreren Strahlenpositionen b in den Rekonstruktionsbereich $\Omega$ rückprojiziert werden. Die Rückprojektions-Strahlen B werden vorzugsweise entsprechend den Vorwärtsprojektions-Strahlen L bestimmt. In diesem Fall entspricht ein Rotationswinkel $\alpha$ des jeweiligen Rückprojektions-Strahls B dem Richtungswinkel $\theta$ des entsprechenden Vorwärtsprojektions-Strahls L. In einem Schritt F9 wird eine gewichtete Rückprojektion derart berechnet, dass die rückprojizierten Projektionsdaten g an den Strahlenpositionen b mit Gewichten versehen werden, wobei das jeweilige Gewicht der Kehrwert eines Abstands e der Strahlenposition b zu der Projektionsposition $\lambda$ ist. Dies ist in Figur 7 beispielhaft anhand von zwei Strahlenpositionen $b_1$ und $b_2$ veranschaulicht. In einem Schritt F10 wird die zu der Projektionsposition $\lambda$ gehörige transformierte Trajektorien-Funktion T mit der gewichteten Rückprojektion zu einem Faltungsergebnis gefaltet. Anschließend wird in einer Schleife D(L3) abgefragt, ob alle Projektionspositionen $\lambda$ abgearbeitet wurden. Falls nein, wird zu Schritt L3 zurückgesprungen und die nächste Projektionsposition $\lambda$ ausgewählt. Dies erfolgt solange, bis alle Projektionspositionen $\lambda$ abgearbeitet sind. Sind alle Projektionspositionen $\lambda$ abgearbeitet, so werden in einem Schritt F11 die Faltungsergebnisse für alle Projektionspositionen $\lambda$ addiert. Die addierten Faltungsergebnisse ergeben eine Rekonstruktion des Objekts f.

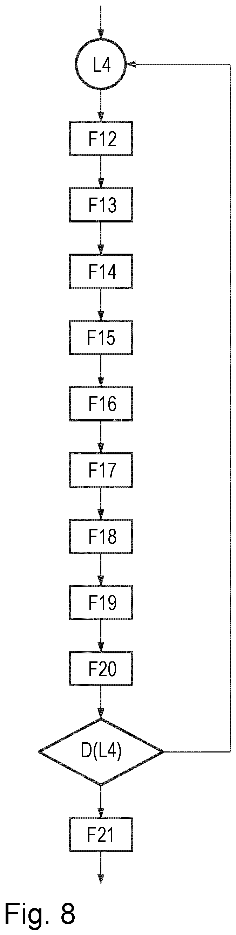

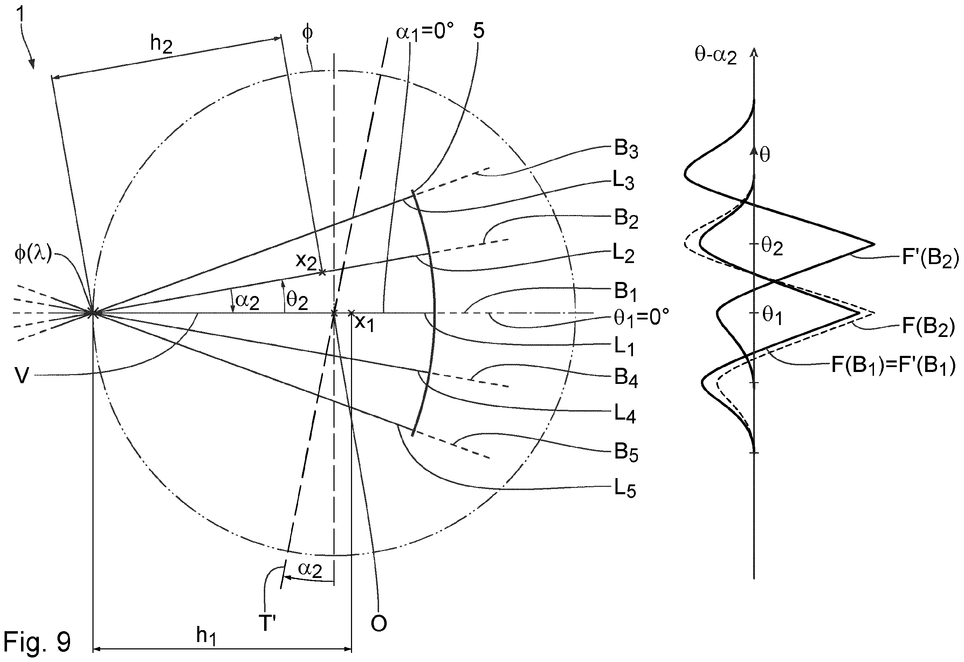

Nachfolgend ist anhand der Figuren 8 bis 10 ein zweites Ausführungsbeispiel für ein Auswerteverfahren zur Auswertung der Projektionsdaten g mittels der transformierten Trajektorien-Funktionen T beschrieben. In einem Schritt L4 wird aus allen Projektionspositionen $\lambda$ eine Projektionsposition $\lambda$ ausgewählt. Anschließend werden in einem Schritt F12 mehrere Rückprojektions-Strahlen B durch den Rekonstruktionsbereich $\Omega$ zur Rückprojektion der zugehörigen Projektionsdaten g bestimmt. In einem darauffolgenden Schritt F13 wird zu jedem Rückprojektions-Strahl B ein Rotationswinkel $\alpha$ bestimmt, wobei sich der Rotationswinkel $\alpha$ ausgehend von dem jeweiligen Rückprojektions-Strahl B bis zu einem Verbindungsstrahl V zwischen der Projektionsposition $\lambda$ und dem Koordinatenursprung O ergibt. In einem Schritt F14 wird zu jedem Rückprojektions-Strahl B eine gedrehte transformierte Trajektorien-Funktion T' derart berechnet, dass die transformierte Trajektorien-Funktion T um den zugehörigen Rotationswinkel $\alpha$ relativ zu dem Koordinatenursprung O gedreht wird. In einem darauffolgenden Schritt F15 werden zu jedem Rückprojektions-Strahl B mehrere Vorwärtsprojektions-Strahlen L mit zugehörigen Richtungswinkeln $\theta$ relativ zu dem Verbindungsstrahl V bestimmt. In Figur 9 sind beispielhaft zwei Rückprojektions-Strahlen $B_1$ und $B_2$ sowie zugehörige Vorwärtsprojektions-Strahlen $L_1$ bis $L_5$ dargestellt. Anschließend werden in einem Schritt F16 zu jedem der Rückprojektionsstrahlen B und in Abhängigkeit der Richtungswinkel $\theta$ eine jeweilige Filter-Funktion F(B) derart berechnet, dass entlang der zugehörigen Vorwärtsprojektions-Strahlen L die gedrehte transformierte Trajektorien-Funktion T' an mehreren Strahlenpositionen x mit Gewichten versehen und aufsummiert wird, wobei das jeweilige Gewicht ein mit einem Exponenten n-2 potenzierter Abstand h der Strahlenposition x zu der Projektionsposition $\lambda$ ist. Dies ist in Figur 9 beispielhaft für die Rückprojektions-Strahlen $B_1$ und $B_2$ und Strahlenpositionen $x_1$ und $x_2$ auf den Vorwärtsprojektions-Strahlen $L_1$ und $L_2$ dargestellt. In einem darauffolgenden Schritt F17 wird eine rotierte Filter-Funktion F'(B) für jeden Rückprojektions-Strahl B derart berechnet, dass die Richtungswinkel $\theta$ der Filter-Funktion F(B) um den negativen Rotationswinkel $\alpha$ des zugehörigen Rückprojektions-Strahls B gedreht werden. Da in Figur 9 der Rückprojektions-Strahl $B_1$ den Rotationswinkel $\alpha_1=0°$ hat, entspricht für diesen Rückprojektions-Strahl $B_1$ die gedrehte Filter-Funktion $F'(B_1)$ der Filter-Funktion $F(B_1)$. In einem nachfolgenden

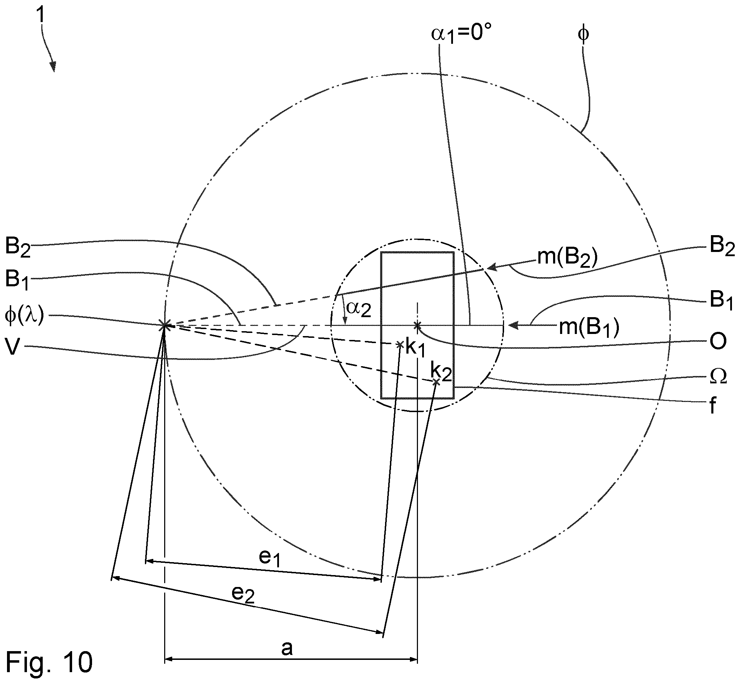

Schritt F18 wird für jeden Rückprojektions-Strahl B ein Rückprojektionswert m derart berechnet, dass ein Produkt der rotierten Filter-Funktion F'(B) und der zugehörigen Projektionsdaten g gebildet und das Produkt elementweise aufsummiert wird. Anschließend wird in einem Schritt F 19 eine Rückprojektion derart berechnet, dass die Rückprojektionswerte m entlang der zugehörigen Rückprojektions-Strahlen B in den Rekonstruktionsbereich $\Omega$ rückprojiziert werden. Dies ist in Figur 10 veranschaulicht. In einem weiteren Schritt F20 wird eine gewichtete Rückprojektion derart berechnet, dass die Rückprojektion an Auswertepositionen k im Rekonstruktionsbereich $\Omega$ mit Gewichten versehen wird, wobei das jeweilige Gewicht ein mit einem Exponenten 2 potenzierter Quotient aus einem ersten Abstand a und einem zweiten Abstand e ist, wobei der erste Abstand a durch die Projektionsposition $\lambda$ und den Koordinatenursprung O und der zweite Abstand e durch die Projektionsposition $\lambda$ und die jeweilige Auswerteposition k definiert ist. Dies ist in Figur 10 beispielhaft für zwei Auswertepositionen $k_1$ und $k_2$ dargestellt. In einer Schleife D(L4) wird abgefragt, ob alle Projektionspositionen $\lambda$ abgearbeitet wurden. Falls nein, wird zu Schritt L4 zurückgesprungen und die nächste Projektionsposition $\lambda$ ausgewählt. Das beschriebene Verfahren wird solange wiederholt, bis alle Projektionspositionen $\lambda$ abgearbeitet sind. Sind alle Projektionspositionen $\lambda$ abgearbeitet, so werden in einem Schritt F21 die berechneten gewichteten Rückprojektionen für alle Projektionspositionen $\lambda$ zu einer Rekonstruktion des Objekts f addiert.

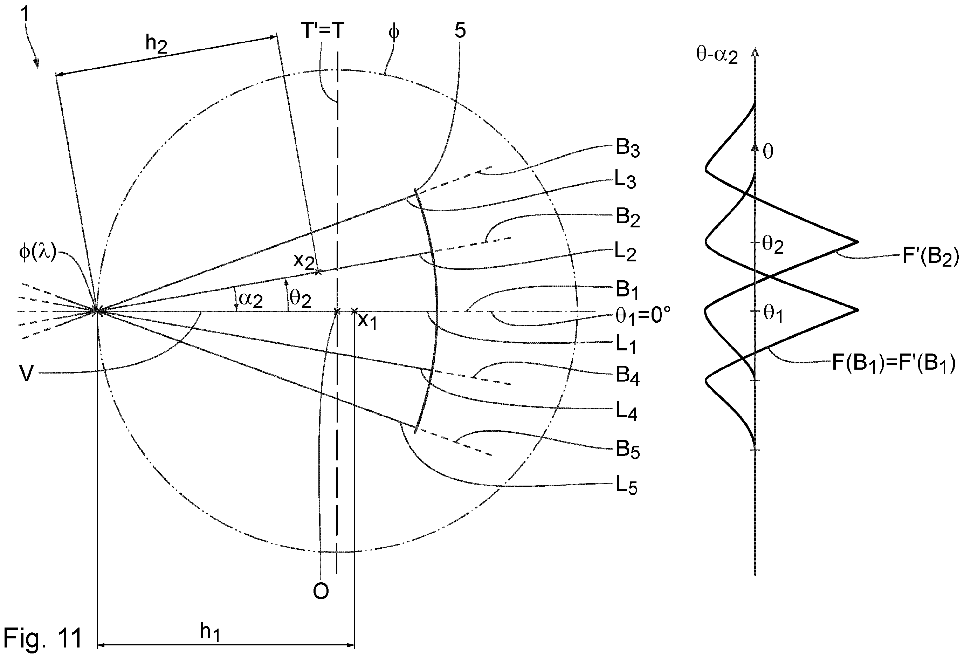

Nachfolgend ist anhand von Figur 11 ein Auswerteverfahren gemäß einem dritten Ausführungsbeispiel beschrieben. Im Unterschied zu dem zweiten Ausführungsbeispiel wird die gedrehte transformierte Trajektorien-Funktion T' und die Filter-Funktion F nur für einen Rückprojektions-Strahl B berechnet, beispielsweise für den Rückprojektions-Strahl $B_1$. Für den Rückprojektions-Strahl $B_1$ entspricht die rotierte Filter-Funktion F'($B_1$) der Filter-Funktion F($B_1$). Die Filter-Funktion F($B_1$) bildet die Basis für die Berechnung der rotierten Filter-Funktionen F'(B) für alle Rückprojektions-Strahlen B. Für die Berechnung der rotierten Filter-Funktionen F'(B) wird die Filter-Funktion F($B_1$) um den negativen Rotationswinkel $\alpha$ des jeweiligen Rückprojektions-Strahls B gedreht. Wie in Figur 11 anhand der Rückprojektions-Strahlen $B_1$ und $B_2$ veranschaulicht ist, ist die rotierte Filter-Funktion F'($B_2$) zu der rotierten Filter-Funktion F'($B_1$) entlang der Richtungswinkel $\theta$ lediglich um den Rotationswinkel $\alpha_2$ verschoben. Die rotierten Filter-Funktionen F'(B) sind somit translationsinvariant, ändern sich also in Abhängigkeit der Rückprojektions-Strahlen B nicht. Hinsichtlich des weiteren Verfahrens bei der Rekonstruktion des Objekts f wird auf das zweite Ausführungsbeispiel verwiesen.

Prinzipiell kann bei dem dritten Ausführungsbeispiel für eine beliebige Anzahl von Rückprojektions-Strahlen B eine zugehörige gedrehte transformierte Trajektorien-Funktion T' und eine Filter-Funktion F berechnet werden, insbesondere zu mindestens drei und insbesondere zu mindestens fünf Rückprojektions-Strahlen B. Mit steigender Anzahl von Rückprojektions-Strahlen B, für die die gedrehte transformierte Trajektorien-Funktion T' und die zugehörige Filter-Funktion F berechnet wird, steigt die Genauigkeit der Rekonstruktion sowie der Rechenaufwand. Bei dem zweiten Ausführungsbeispiel ist die Genauigkeit am höchstens, wohingegen bei dem dritten Ausführungsbeispiel der Rechenaufwand am niedrigsten ist. Vorzugsweise werden bei mehreren Rückprojektions-Strahlen B, für die eine gedrehte transformiert Trajektorien-Funktion T' und eine Filter-Funktion F berechnet wird, die rotierten Filter-Funktionen F' abschnittsweise für Rückprojektions-Strahlen B ermittelt, deren Rotationswinkel $\alpha$ einen Winkelbereich von 3° bis 15°, insbesondere von 4° bis 10° einschließen. Vorzugsweise ist einer der Winkelbereiche symmetrisch zu dem Verbindungsstrahl V angeordnet, so dass die einfache Berechnung der Filter-Funktion F für den Rotationswinkel $\alpha = 0$ bei der Berechnung der rotierten Filter-Funktionen F' genutzt werden kann. In dem jeweiligen Winkelbereich ist die zugehörige Filter-Funktion F lediglich verschoben und somit in diesem Abschnitt translationsinvariant.

Das erfindungsgemäße Verfahren sowie die erfindungsgemäße Auswertevorrichtung sind insbesondere auch dazu geeignet, lang ausgedehnte Objekte f zu untersuchen. Bei derartigen Objekten f ergibt sich üblicherweise das Problem, dass sich mindestens zwei Bereiche, die in den zugehörigen Projektionsdaten g zu mindestens zwei Projektionspositionen $\lambda$ abgebildet sind, in dem Rekonstruktionsbereich $\Omega$ nicht überdecken. Dieses Problem ist als Long-Object-Problem bekannt. Das erfindungsgemäße Verfahren liefert auch bei der Auswertung derartiger Projektionsdaten g gute Auswerteergebnisse.

Das erfindungsgemäße Verfahren ist prinzipiell auf Rekonstruktionsbereiche $\Omega$ mit einer beliebigen Dimension n anwendbar. Zusätzlich zu drei räumlichen Dimensionen kann auch als vierte Dimension eine zeitliche Dimension ausgewertet werden, wenn sich das zu untersuchende Objekt f zeitlich verändert. Für diesen Fall werden an den Projektionspositionen $\lambda$ mehrerer zeitlich versetzte Projektionsdaten g ermittelt, wodurch Projektionsdaten g für die vierte Dimension bereitgestellt werden.

Zur Durchführung des erfindungsgemäßen Verfahrens kann beispielsweise ein Computerprogramm-Produkt vorgesehen sein, das Programmteile umfasst, die in einem Computer geladen zur Durchführung des erfindungsgemäßen Verfahrens ausgelegt sind.

**Patentansprüche**

1.  Verfahren zur Auswertung von, insbesondere mittels Röntgencomputertomografie ermittelten, Projektionsdaten eines zu untersuchenden Objekts mittels eines Computers, umfassend die Schritte:

- Bereitstellen von Projektionsdaten (g) eines zu untersuchenden Objekts (f), die entlang einer Trajektorie ($\phi$) in mehreren Projektionspositionen ($\lambda$) relativ zu einem Koordinatenursprungs (O) ermittelt sind,
- Ermitteln einer jeweiligen Trajektorien-Funktion (t) für die Projektionspositionen ($\lambda$), indem für mehrere Positionen (y) aus einem Rekonstruktionsbereich ($\Omega$) der Dimension n jeweils

-- ein Abstand d, der dem Wert eines Skalarprodukts zwischen der Position (y) und der Projektionsposition ($\lambda$) entspricht, und ein Richtungsvektor (r) zu dem Koordinatenursprung (O) bestimmt wird,
-- eine Hyperebene (H) der Dimension n-1 bestimmt wird, die senkrecht zu dem Richtungsvektor (r) verläuft und den Abstand d zu dem Koordinatenursprung (O) hat,
-- eine Anzahl (s) von Schnittpunkten (S) der Hyperebene (H) mit der Trajektorie ($\phi$) bestimmt wird,
-- ein Ableitungsvektor ($\phi'$) der Trajektorie ($\phi$) nach ihrem Trajektorienverlauf bestimmt und in der Projektionsposition ($\lambda$) berechnet wird,
-- ein Absolutbetrag eines Skalarprodukts zwischen dem Ableitungsvektor ($\phi'$) und der Position (y) bestimmt und dieser durch die Anzahl (s) geteilt wird, und

- Transformieren der Trajektorien-Funktionen (t) in einen Frequenzraum der Dimension n in Abhängigkeit der Positionen (y),
- Auswerten der Projektionsdaten (g) mittels der transformierten Trajektorien-Funktionen (T) zur Berechnung mindestens einer Eigenschaft des Objekts (f).

2. Verfahren nach Anspruch 1, **dadurch gekennzeichnet, dass** sich mindestens zwei Bereiche, die in zugehörigen Projektionsdaten (g) zu mindestens zwei Projektionspositionen ($\lambda$) abgebildet sind, in dem Rekonstruktionsbereich ($\Omega$) nicht überdecken.

3. Verfahren nach Anspruch 1 oder 2, **dadurch gekennzeichnet, dass** die Positionen (y) in einem Gitter der Dimension n angeordnet sind, wobei das Gitter zumindest teilweise in dem Rekonstruktionsbereich ($\Omega$) angeordnet ist, und den Rekonstruktionsbereich ($\Omega$) insbesondere vollständig umfasst.

4. Verfahren nach einem der Ansprüche 1 bis 3, **dadurch gekennzeichnet, dass** zumindest eine Position (y) in dem Rekonstruktionsbereich ($\Omega$) derart bestimmt wird, dass für den zugehörigen Abstand d gilt: $d \neq 1$.

5. Verfahren nach einem der Ansprüche 1 bis 4, **dadurch gekennzeichnet, dass** die Trajektorie ($\phi$) eine Tuy-Kurve ist oder die Trajektorie ($\phi$) keine Tuy-Kurve ist und für jede Position (y), deren zugehörige Hyperebene (H) keinen Schnittpunkt mit der Trajektorie ($\phi$) hat, ein Schätzwert für die Anzahl (s) der Schnittpunkte (S) ungleich Null bestimmt wird.

6. Verfahren nach einem der Ansprüche 1 bis 5, **dadurch gekennzeichnet, dass** das Transformieren in den Frequenzraum mittels einer Fourier-Transformation erfolgt.

7. Verfahren nach einem der Ansprüche 1 bis 6, **dadurch gekennzeichnet, dass** das Auswerten mittels der transformierten Trajektorien-Funktionen (T) ein zumindest teilweises Rekonstruieren des Objekts (f) mit den Schritten umfasst:

- Berechnen eines Faltungsergebnisses für jede Projektionsposition ($\lambda$), indem

-- mehrere Rückprojektions-Strahlen (B) durch den Rekonstruktionsbereich ($\Omega$) zur Rückprojektion der zugehörigen Projektionsdaten (g) bestimmt werden,
-- die Projektionsdaten (g) entlang der Rückprojektions-Strahlen (B) an mehreren Strahlenpositionen (b) in den Rekonstruktionsbereich ($\Omega$) rückprojiziert werden,
-- eine gewichtete Rückprojektion derart berechnet wird, dass die rückprojizierten Projektionsdaten (g) an den Strahlenpositionen (b) mit Gewichten versehen werden, wobei das jeweilige Gewicht der Kehrwert eines Abstands (e) der Strahlenposition (b) zu der Projektionsposition ($\lambda$) ist,
-- die der jeweiligen Projektionsposition ($\lambda$) zugehörige transformierte Trajektorien-Funktion (T) mit der jeweiligen gewichteten Rückprojektion zu dem jeweiligen Faltungsergebnis gefaltet wird,

- Addieren der Faltungsergebnisse für die Projektionspositionen ($\lambda$) zu einer zumindest teilweisen Rekonstruktion des Objekts (f).

8. Verfahren nach einem der Ansprüche 1 bis 6, **dadurch gekennzeichnet, dass** das Auswerten mittels der transformierten Trajektorien-Funktionen (T) ein zumindest teilweises Rekonstruieren des Objekts (f) mit den Schritten umfasst:

- Berechnen einer gewichteten Rückprojektion für jede Projektionsposition (λ), indem

-- mehrere Rückprojektions-Strahlen (B) durch den Rekonstruktionsbereich (Ω) zur Rückprojektion der zugehörigen Projektionsdaten (g) bestimmt werden,
-- zu jedem Rückprojektions-Strahl (B) ein Rotationswinkel (α) bestimmt wird, wobei sich der Rotationswinkel (α) ausgehend von dem Rückprojektions-Strahl (B) bis zu einem Verbindungsstrahl (V) zwischen der Projektionsposition (λ) und dem Koordinatenursprung (O) ergibt,
-- eine gedrehte transformierte Trajektorien-Funktion (T') zu mindestens einem der Rückprojektions-Strahlen (B) derart berechnet wird, dass die transformierte Trajektorien-Funktion (T) um den zugehörigen Rotationswinkel (α) relativ zu dem Koordinatenursprung (O) gedreht wird,
-- zu jedem Rückprojektions-Strahl (B) mehrere Vorwärtsprojektions-Strahlen (L) mit zugehörigen Richtungswinkeln (θ) bestimmt werden,
-- eine Filter-Funktion (F) zu dem mindestens einen Rückprojektions-Strahl (B) und in Abhängigkeit der Richtungswinkel (θ) derart berechnet wird, dass entlang der zugehörigen Vorwärtsprojektions-Strahlen (L) die gedrehte transformierte Trajektorien-Funktion (T') an mehreren Strahlenpositionen (x) mit Gewichten versehen und aufsummiert wird, wobei das jeweilige Gewicht ein mit einem Exponenten n-2 potenzierter Abstand (h) der Strahlenposition (x) zu der Projektionsposition (λ) ist,
-- eine rotierte Filter-Funktion (F') für jeden Rückprojektions-Strahl (B) derart berechnet wird, dass die Richtungswinkel (θ) der Filter-Funktion (F) um den negativen Rotationswinkel (α) gedreht werden,
-- ein Rückprojektionswert (m) für jeden Rückprojektions-Strahl (B) derart berechnet wird, dass ein Produkt der rotierten Filter-Funktion (F') und der zugehörigen Projektionsdaten (g) gebildet und das Produkt aufsummiert wird,
-- eine Rückprojektion derart berechnet wird, dass die Rückprojektionswerte (m) entlang der zugehörigen Rückprojektions-Strahlen (B) in den Rekonstruktionsbereich (Ω) rückprojiziert werden,
-- eine gewichtete Rückprojektion derart berechnet wird, dass die Rückprojektion an Auswertepositionen (k) im Rekonstruktionsbereich (Ω) mit Gewichten versehen wird, wobei das jeweilige Gewicht ein mit einem Exponenten 2 potenzierter Quotient aus einem ersten Abstand (a) und einem zweiten Abstand (e) ist, wobei der erste Abstand (a) durch die Projektionsposition (λ) und den Koordinatenursprung (O) und der zweite Abstand (e) durch die Projektionsposition (λ) und die jeweilige Auswerteposition (k) definiert ist,

- Addieren der gewichteten Rückprojektionen für die Projektionspositionen (λ) zu einer zumindest teilweisen Rekonstruktion des Objekts (f).

9. Verfahren nach Anspruch 8, **dadurch gekennzeichnet, dass** die gedrehte transformierte Trajektorien-Funktion (T') und die Filter-Funktion (F) zu mindestens drei, insbesondere zu mindestens fünf, und insbesondere zu jedem Rückprojektions-Strahl (B) berechnet wird.

10. Verfahren nach Anspruch 8 oder 9, **dadurch gekennzeichnet, dass** die rotierte Filter-Funktion (F') für Rückprojektions-Strahlen (B) berechnet wird, deren Rotationswinkel (α) einen Winkelbereich von 3° bis 15°, insbesondere von 4° bis 10° einschließen, wobei der Winkelbereich insbesondere symmetrisch zu dem Verbindungsstrahl (V) angeordnet ist.

11. Auswertevorrichtung zur Auswertung von, insbesondere mittels Röntgencomputertomografie ermittelten, Projektionsdaten eines zu untersuchenden Objekts, die derart ausgebildet ist, dass

- Projektionsdaten (g) eines zu untersuchenden Objekts (f) bereitgestellt werden, die entlang einer Trajektorie (φ) in mehreren Projektionspositionen (λ) relativ zu einem Koordinatenursprungs (O) ermittelt sind,
- eine jeweilige Trajektorien-Funktion (t) für die Projektionspositionen (λ) ermittelt wird, indem für mehrere Positionen (y) aus einem Rekonstruktionsbereich (Ω) der Dimension n jeweils

-- ein Abstand d, der dem Wert eines Skalarprodukts zwischen der Position (y) und der Projektionsposition (λ) entspricht, und ein Richtungsvektor (r) zu dem Koordinatenursprung (O) bestimmt wird,
-- eine Hyperebene (H) der Dimension n-1 bestimmt wird, die senkrecht zu dem Richtungsvektor (r) verläuft und den Abstand d zu dem Koordinatenursprung (O) hat,

-- eine Anzahl (s) von Schnittpunkten (S) der Hyperebene (H) mit der Trajektorie (φ) bestimmt wird,
-- ein Ableitungsvektor (φ') der Trajektorie (φ) nach ihrem Trajektorienverlauf bestimmt und in der Projektionsposition (λ) berechnet wird,
-- ein Absolutbetrag eines Skalarprodukts zwischen dem Ableitungsvektor (φ') und der Position (y) bestimmt und dieser durch die Anzahl (s) geteilt wird, und

- die Trajektorien-Funktionen (t) in einen Frequenzraum der Dimension n in Abhängigkeit der Positionen (y) transformiert werden,
- die Projektionsdaten (g) mittels der transformierten Trajektorien-Funktionen (T) zur Berechnung mindestens einer Eigenschaft des Objekts (f) ausgewertet werden.

**12.** Prüfanlage zur Ermittlung und Auswertung von Projektionsdaten eines zu untersuchenden Objekts, insbesondere Röntgencomputertomograf, mit

- einer Projektionsquelle (4) zum Bestrahlen eines zu untersuchenden Objekts (f) aus mehreren auf einer Trajektorie (φ) liegenden Projektionspositionen (λ) mit Strahlung,
- einem Detektor (5) zum Ermitteln von Projektionsdaten (g) des Objekts (f), und
- einer Auswertevorrichtung (3) gemäß Anspruch 11.

**13.** Computerprogramm-Produkt, umfassend Programmteile, die in einem Computer geladen zur Durchführung eines Verfahrens nach einem der Ansprüche 1 bis 10 ausgelegt sind.

**Claims**

**1.** Method for the evaluation of projection data of an object being examined, determined in particular by means of x-ray computed tomography, comprising the steps:

- provision of projection data (g) of an object (f) being examined which are determined along a trajectory (φ) in a multiplicity of projection positions (λ) relative to a co-ordinate origin (O),
- determination of a respective trajectory function (t) for the projection positions (λ), for each of a multiplicity of positions (y) from a reconstruction region (Ω) of dimension n by

-- establishing an offset d, which corresponds to the value of a scalar product between the position (y) and the projection position (λ), and a direction vector (r) at the co-ordinate origin (O),
-- establishing a hyperplane (H) of dimension n-1 which runs perpendicular to the direction vector (r) and has the offset d to the co-ordinate origin (O),
-- establishing a number (s) of intersection points (S) where the hyperplane (H) intersects with the trajectory (φ),
-- establishing a derivative vector (φ') of the trajectory (φ) according to its trajectory path and calculating the derivative vector (φ') in the projection position (λ),
-- establishing an absolute value of a scalar product between the derivative vector (φ') and the position (y) and dividing the absolute value by the number (s), and

- transforming the trajectory functions (t) into a frequency domain of dimension n relative to the positions (y),
- evaluation of the projection data (g) by means of the transformed trajectory functions (T) to calculate at least one property of the object (f).

**2.** Method according to claim 1, **characterized in that** at least two areas which are imaged in associated projection data (g) to at least two projection positions (λ) do not cover each other in the reconstruction region (Ω).

**3.** Method according to claim 1 or 2, **characterized in that** the positions (y) are arranged in a grid of dimension n, wherein the grid is arranged at least partially in the reconstruction region (Ω), and comprises the reconstruction region (Ω) in particular completely.

**4.** Method according to any one of the claims 1 to 3, **characterized in that** at least one position (y) in the reconstruction region (Ω) is established such that $d \neq 1$ holds for the associated offset d.

5. Method according to any one of the claims 1 to 4, **characterized in that** the trajectory ($\phi$) is a Tuy curve or the trajectory ($\phi$) is not a Tuy curve and for each position (y) whose associated hyperplane (H) does not intersect with the trajectory ($\phi$), an estimated value, which does not equal zero, is established for the number (s) of the intersection points (S).

6. Method according to any one of the claims 1 to 5, **characterized in that** the transforming into the frequency domain is carried out by means of a Fourier transform.

7. Method according to any one of the claims 1 to 6, **characterized in that** the evaluation by means of the transformed trajectory functions (T) comprises at least a partial reconstruction of the object (f) with the steps:

- calculation of a convolution result for each projection position ($\lambda$) by

-- establishing a multiplicity of back-projection beams (B) through the reconstruction region ($\Omega$) to the back-projection of the associated projection data (g),
-- back-projecting the projection data (g) along the back-projection beams (B) at a multiplicity of beam positions (b) into the reconstruction region ($\Omega$),
-- calculating a weighted back-projection such that the back-projected projection data (g) at beam positions (b) are provided with weightings, wherein the respective weighting is the reciprocal of an offset (e) of the beam position (b) to the projection position ($\lambda$),
-- convolving the transformed trajectory function (T) belonging to the respective projection position ($\lambda$) with the respective weighted back-projection into the respective convolution result,

- summing the convolution results for the projection positions ($\lambda$) for at least a partial reconstruction of the object (f).

8. Method according to any one of the claims 1 to 6, **characterized in that** the evaluation by means of the transformed trajectory functions (T) comprises at least a partial reconstruction of the object (f) with the steps:

- calculation of a weighted back-projection for each projection position ($\lambda$) by

-- establishing a multiplicity of back-projection beams (B) through the reconstruction region ($\Omega$) for the back-projection of the associated projection data (g),
-- establishing for each back-projection beam (B) a rotational angle ($\alpha$), in which the rotational angle ($\alpha$) starting from the back-projection beam (B) to a connection beam (V) between the projection position ($\lambda$) and the co-ordinate origin (O) is produced,
-- calculating a rotated transformed trajectory function (T') for at least one of the back-projection beams (B) such that the transformed trajectory function (T) is rotated about the associated rotational angle ($\alpha$) relative to the co-ordinate origin (O),
-- establishing for each back-projection beam (B) a multiplicity of forward projection beams (L) with associated directional angles ($\theta$),
-- calculating a filter function (F) for the at least one back-projection beam (B) and as a function of the directional angle ($\theta$) such that, along the associated forward projection beams (L), the rotated transformed trajectory function (T') at a multiplicity of beam positions (x) is provided with weightings and summed, wherein the respective weighting is an offset (h), raised to the power n-2, of the beam position (x) to the projection position ($\lambda$),
-- calculating a rotated filter function (F') for each back-projection beam (B) such that the directional angles ($\theta$) of the filter function (F) are rotated about the negative rotational angle ($\alpha$),
-- calculating a back projection value (m) for each back-projection beam (B) such that a product of the rotated filter function (F') and the associated projection data (g) is formed and the product is summed,
-- calculating a back-projection such that the back projection values (m) along the associated back-projection beams (B) are back-projected into the reconstruction region ($\Omega$),
-- calculating a weighted back-projection such that the back-projection at evaluation positions (k) in the reconstruction region ($\Omega$) is provided with weightings, wherein the respective weighting is a quotient, raised to the power 2, of a first offset (a) and a second offset (e), wherein the first offset (a) is defined by the projection position ($\lambda$) and the co-ordinate origin (O) and the second offset (e) by the projection position ($\lambda$) and the respective evaluation position (k),

- summing the weighted back projections for the projection positions (λ) for at least a partial reconstruction of the object (f).

9. Method according to claim 8, **characterized in that** the rotated transformed trajectory function (T') and the filter function (F) are calculated for at least three, in particular for at least five, and, in particular, for each back-projection beam (B).

10. Method according to claim 8 or 9, **characterized in that** the rotated filter function (F') is calculated for back-projection beams (B), whose rotational angles (α) include an angular range of 3° to 15°, in particular of 4° to 10°, wherein the angular range is arranged, in particular, symmetrically to the connection beam (V).

11. Evaluation device for the evaluation of projection data of an object being examined, determined in particular by means of x-ray computed tomography, which is designed such that

- projection data (g) of an object (f) being examined are provided which are determined along a trajectory (φ) in a multiplicity of projection positions (λ) relative to a co-ordinate origin (O),
- a respective trajectory function (t) is determined for the projection positions (λ) for each of a multiplicity of positions (y) from a reconstruction region (Ω) of dimension n by

-- establishing an offset d, which corresponds to the value of a scalar product between the position (y) and the projection position (λ), and a direction vector (r) at the co-ordinate origin (O),
-- establishing a hyperplane (H) of dimension n-1 which runs perpendicular to the direction vector (r) and has the offset d to the co-ordinate origin (O),
-- establishing a number (s) of intersection points (S) where the hyperplane (H) intersects with the trajectory (φ),
-- establishing a derivative vector (φ') of the trajectory (φ) according to its trajectory path and calculating the derivative vector (φ') in the projection position (λ),
-- establishing an absolute value of a scalar product between the derivative vector (φ') and the position (y) and dividing the absolute value by the number (s), and

- the trajectory functions (t) in a frequency domain of dimension n are transformed relative to the positions (y),
- the projection data (g) are evaluated by means of the transformed trajectory functions (T) to calculate at least one property of the object (f).

12. Test facility for the determination and evaluation of projection data of an object being examined, in particular x-ray computer tomograph, with

- a projection source (4) for the radiation of an object (f) being examined from a multiplicity of projection positions (λ) lying on a trajectory (φ)
- a detector (5) to determine projection data (g) of the object (f), and
- an evaluation device (3) according to claim 11.

13. Computer program product, comprising program sections which are uploaded on to a computer to perform a method according to any one of the claims 1 to 10.

**Revendications**

1. Procédé d'exploitation de données de projection, établies en particulier par tomodensitométrie radiographique, d'un objet à examiner au moyen d'un ordinateur, comprenant les étapes de :

- fourniture de données de projection (g) d'un objet (f) à examiner qui sont établies le long d'une trajectoire (φ) dans plusieurs positions de projection (λ) par rapport à une origine de repère (O),
- établissement d'une fonction de trajectoires (t) respective pour les positions de projection (λ), dans laquelle pour plusieurs positions (y) d'une zone de reconstruction (Ω) de la dimension n respectivement

-- une distance d, qui correspond à la valeur d'un produit scalaire entre la position (y) et la position de projection (λ), et un vecteur directionnel (r) est déterminé(e) par rapport à l'origine de repère (O),

-- un hyperplan (H) de la dimension n-1 est déterminé, qui se déroule perpendiculairement au vecteur directionnel (r) et présente la distance d par rapport à l'origine de repère (O),
-- un nombre (s) de points d'intersection (S) de l'hyperplan (H) avec la trajectoire ($\phi$) est déterminé,
-- un vecteur de dérivée ($\phi$') de la trajectoire ($\phi$) est déterminé d'après son déroulement de trajectoire et est calculé dans la position de projection ($\lambda$),
-- une valeur absolue d'un produit scalaire entre le vecteur de dérivée ($\phi$') et la position (y) est déterminée et divisée par le nombre (s), et

- transformation des fonctions de trajectoires (t) en un espace de fréquence de la dimension n en fonction des positions (y),
- exploitation des données de projection (g) au moyen des fonctions de trajectoires transformées (T) pour le calcul d'au moins une propriété de l'objet (f).

2. Procédé selon la revendication 1, **caractérisé en ce qu'**au moins deux zones, qui dans des données de projection (g) correspondantes sont représentées pour au moins deux positions de projection ($\lambda$), ne se recouvrent pas dans la zone de reconstruction ($\Omega$).

3. Procédé selon la revendication 1 ou 2, **caractérisé en ce que** les positions (y) sont agencées dans une grille de la dimension n, dans lequel la grille est agencée au moins partiellement dans la zone de reconstruction ($\Omega$), et comprend en particulier complètement la zone de reconstruction ($\Omega$).

4. Procédé selon l'une quelconque des revendications 1 à 3, **caractérisé en ce qu'**au moins une position (y) est déterminée de manière telle dans la zone de reconstruction ($\Omega$) que pour la distance correspondante s'applique : $d \neq 1$.

5. Procédé selon l'une quelconque des revendications 1 à 4, **caractérisé en ce que** la trajectoire ($\phi$) est une courbe Tuy ou la trajectoire ($\phi$) n'est pas une courbe Tuy, et pour chaque position (y) dont l'hyperplan (H) correspondant ne présente aucune intersection avec la trajectoire ($\phi$), une valeur estimée pour le nombre (s) d'intersections (S) est déterminé comme étant différente de zéro.

6. Procédé selon l'une quelconque des revendications 1 à 5, **caractérisé en ce que** la transformation en l'espace de fréquence s'effectue au moyen d'une transformation de Fourier.

7. Procédé selon l'une quelconque des revendications 1 à 6, **caractérisé en ce que** l'exploitation au moyen des fonctions de trajectoires transformées (T) comprend une reconstruction au moins partielle de l'objet (f) avec les étapes de :

- calcul d'un résultat de pliage pour chaque position de projection ($\lambda$), dans lequel

-- plusieurs faisceaux de rétroprojection (B) sont déterminés par la zone de reconstruction ($\Omega$) pour la rétroprojection des données de projection (g) correspondantes,
-- les données de projection (g) sont rétroprojetées le long des faisceaux de rétroprojection (B) au niveau de plusieurs positions de faisceau (b) dans la zone de reconstruction ($\Omega$),
-- une rétroprojection pondérée est calculée de manière telle que les données de projection (g) rétroprojetées sont dotées de poids au niveau des positions de faisceau (b), dans lequel le poids respectif est la valeur inverse d'une distance (e) de la position de faisceau (b) par rapport à la position de projection ($\lambda$),
-- la fonction de trajectoires transformée (T) correspondant à la position de projection ($\lambda$) respective est pliée avec la rétroprojection pondérée respective en vue du résultat de pliage respectif,

- ajout des résultats de pliage pour les positions de projection ($\lambda$) à une reconstruction au moins partielle de l'objet (f).

8. Procédé selon l'une quelconque des revendications 1 à 6, **caractérisé en ce que** l'exploitation au moyen des fonctions de trajectoires transformées (T) comprend une reconstruction au moins partielle de l'objet (f) avec les étapes de :

- calcul d'une rétroprojection pondérée pour chaque position de projection ($\lambda$), dans lequel

-- plusieurs faisceaux de rétroprojection (B) sont déterminés par la zone de reconstruction ($\Omega$) pour la

rétroprojection des données de projection (g) correspondantes,

-- un angle de rotation (α) est déterminé pour chaque faisceau de rétroprojection (B), dans lequel l'angle de rotation (α) découle depuis le faisceau de rétroprojection (B) jusqu'à un faisceau de liaison (V) entre la position de projection (λ) et l'origine de repère (O),

-- une fonction de trajectoires transformée tournée (T') vers au moins l'un des faisceaux de rétroprojection (B) est calculé de manière telle que la fonction de trajectoires transformée (T) est tournée suivant l'angle de rotation (α) correspondant par rapport à l'origine de repère (O),

-- à chaque faisceau de rétroprojection (B) sont déterminés plusieurs faisceaux de projection en avant (L) avec des angles directionnels (θ) correspondants,

-- une fonction filtre (F) pour laquelle au moins un faisceau de rétroprojection (B) et en dépendance l'angle directionnel (θ) est calculé de manière telle que le long des faisceaux de projection en avant (L) correspondants, la fonction de trajectoires transformée tournée (T') est dotée de poids et additionnée au niveau de plusieurs positions de faisceaux (x), dans lequel le poids respectif est une distance (h) élevée à un exposant n-2 de la position de faisceau (x) par rapport à la position de projection (λ),

-- une fonction filtre mise en rotation (F') pour chaque faisceau de rétroprojection (B) est calculé de manière telle que les angles directionnels (θ) de la fonction filtre (F) sont tournés autour de l'angle de rotation (α) négatif,

-- une valeur de rétroprojection (m) pour chaque faisceau de rétroprojection (B) est calculée de manière telle qu'un produit de la fonction filtre mise en rotation (F') et des données de projection (g) correspondantes est formé et le produit est additionné,

-- une rétroprojection est calculée de manière telle que les valeurs de rétroprojection (m) sont rétroprojetées le long des faisceaux de rétroprojection (B) correspondants dans la zone de reconstruction (Ω),

-- une rétroprojection pondérée est calculée de manière telle que la rétroprojection est dotée de poids au niveau de positions d'exploitation (k) dans la zone de reconstruction (Ω), dans lequel le poids respectif est un quotient élevé à un exposant 2 d'une première distance (a) et d'une seconde distance (e), dans lequel la première distance (a) est définie par la position de projection (λ) et l'origine de repère (O), et la seconde distance (e) est définie par la position de projection (λ) et la position d'exploitation (k) correspondante,

- ajout des rétroprojections pondérées pour les positions de projection (λ) à une reconstruction au moins partielle de l'objet (f).

9. Procédé selon la revendication 8, **caractérisé en ce que** la fonction de trajectoires transformée tournée (T') et la fonction filtre (F) est calculée pour au moins trois, en particulier pour au moins cinq, et en particulier pour chaque faisceau(x) de rétroprojection (B).

10. Procédé selon la revendication 8 ou 9, **caractérisé en ce que** la fonction filtre mise en rotation (F') est calculée pour des faisceaux de rétroprojection (B) dont les angles de rotation (α) englobent une plage angulaire de 3° à 15°, en particulier de 4° à 10°, dans lequel la plage angulaire est agencée en particulier symétriquement par rapport au faisceau de liaison (V).

11. Dispositif d'exploitation destiné à exploiter des données de projection, établies en particulier par tomodensitométrie radiographique, d'un objet à examiner, lequel dispositif est formé de manière telle que :

- des données de projection (g) d'un objet (f) à examiner sont fournies, qui sont établies le long d'une trajectoire (φ) dans plusieurs positions de projection (λ) par rapport à une origine de repère (O),
- une fonction de trajectoires (t) respective est établie pour les positions de projection (λ), dans laquelle pour plusieurs positions (y) d'une zone de reconstruction (Ω) de la dimension n respectivement

-- une distance d, qui correspond à la valeur d'un produit scalaire entre la position (y) et la position de projection (λ), et un vecteur directionnel (r) par rapport à l'origine de repère (O) est déterminé(e),

-- un hyperplan (H) de la dimension n-1 est déterminé, qui se déroule perpendiculairement au vecteur directionnel (r) et présente la distance d par rapport à l'origine de repère (O),

-- un nombre (s) de points d'intersection (S) de l'hyperplan (H) avec la trajectoire (φ) est déterminé,

-- un vecteur de dérivée (φ') de la trajectoire (φ) est déterminé d'après son déroulement de trajectoire et est calculé dans la position de projection (λ),

-- une valeur absolue d'un produit scalaire entre le vecteur de dérivée (φ') et la position (y) est déterminée et divisée par le nombre (s), et

- les fonctions de trajectoires (t) sont transformées en un espace de fréquence de la dimension n en fonction des positions (y),
- les données de projection (g) sont exploitées au moyen des fonctions de trajectoires transformées (T) pour le calcul d'au moins une propriété de l'objet (f).

12. Installation de contrôle destinée à établir et exploiter des données de projection d'un objet à examiner, en particulier un tomodensitomètre, avec

- une source de projection (4) pour irradier un objet (f) à examiner de plusieurs positions de projection ($\lambda$) situées sur une trajectoire ($\phi$) avec un rayonnement,
- un détecteur (5) pour établir des données de projection (g) de l'objet (f), et
- un dispositif d'exploitation (3) selon la revendication 11.

13. Produit logiciel, comprenant des parties de programme chargées dans un ordinateur, conçues pour exécuter un procédé selon l'une quelconque des revendications 1 à 10.

Fig. 1

EP 3 158 534 B1

Fig. 2

Fig. 3

EP 3 158 534 B1

Fig. 4

Fig. 5

Fig. 6

Fig. 7

Fig. 8

Fig. 9

Fig. 10

EP 3 158 534 B1

Fig. 11

EP 3 158 534 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Mathematical framework of cone-beam reconstruction via the first derivative of the radon transform. **P. GRANGEAT.** Lecture Notes in Mathematics. Springer, 1991, vol. 1497, 66-97
- **A. KATSEVICH.** A general scheme for constructing inversion algorithms for cone beam ct. *International Journal of Mathematics and Mathematical Sciences,* 2003, vol. 21, 1305-1321
- **A. KATSEVICH.** An improved exact filtered backprojection algorithm for spiral computed tomography. *Advances in Applied Mathematics,* Mai 2004, vol. 32 (4), 681-697